# EUROPÄISCHE PATENTANMELDUNG

(11) **EP 3 441 122 A1**
(43) Veröffentlichungstag der Anmeldung: **13.02.2019**
(21) Anmeldenummer: 17400050.5
(22) Anmeldetag: 07.08.2017
(51) Int. Cl.: B01D 3/34, B01D 53/14, B01D 53/52

(54) **KOLONNE ZUM STRIPPEN UND REABSORBIEREN**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt am Main (DE); Szabo, Robert, 60326 Frankfurt am Main (DE); Leichner, Hincal, 65429 Hochheim (DE); Sharon, Corbet, 60438 Frankfurt am Main (DE); Teja, Schmid McGuiness, 60316 Frankfurt am Main (DE)
(74) Vertreter: Dropsch, Holger

(57) **Zusammenfassung**

Stripp- und Reabsorptionskolonne zur Abtrennung von Kohlendioxid aus einer Absorptionsflüssigkeit, wobei die Kolonne mindestens auf einem Teil ihrer Länge als Packungskolonne ausgebildet ist.

## Beschreibung

### Gebiet der Erfindung

Die Erfindung betrifft eine Kolonne, umfassend einen unteren, den Kolonnensumpf umfassenden Abschnitt zum Abtrennen absorbierter Gase aus einer beladenen Absorptionsflüssigkeit durch Strippen, welcher einen Einlass für die beladene Absorptionsflüssigkeit, Einbauten zur Förderung des Stoffaustauschs, einen Einlass für das Strippgas und einen Auslass an der tiefsten Stelle des Sumpfes für die behandelte Flüssigkeit umfasst, und einen oberen, den Kolonnenkopf umfassenden Abschnitt zur Reabsorption eines Teils der gestrippten Gase durch eine Absorptionsflüssigkeit, umfassend einen Einlass für die Absorptionsflüssigkeit, Einbauten zur Förderung des Stoffaustauschs und einen Auslass im Kolonnenkopf für das Gasgemisch aus Strippgas und dem aus der Flüssigkeit abgetrennten Gas umfasst, wobei die Abschnitte so miteinander verbunden sind, dass Gas vom unteren in den oberen und Flüssigkeit vom oberen in den unteren Abschnitt fließen.

Die Erfindung betrifft ebenso die Verwendung der Kolonne in einer Anlage zum Betreiben eines Verfahrens zur Reinigung von Rohsynthesegas.

### Stand der Technik

Derartige Kolonnen und Verfahren zur Abtrennung von unerwünschten Begleitstoffen aus einem Rohsynthesegasstrom, wie z. B. das Rectisol-, das Purisol- und das Selexol-Verfahren, sind bekannt.

Das Purisol- und das Selexol-Verfahren werden in Ullmann's Encyclopedia of Industrial Chemistry, 6. Aufl. Bd. 15, S. 404 - 407 grundsätzlich beschrieben. Das Purisol-Verfahren verwendet das organische Absorptionsmittel N-Methylpyrrolidon und wird bei Umgebungs- oder leicht darunter liegenden Temperaturen betrieben. Das Selexol-Verfahren verwendet Polyethylenglykoldimethylether als Absorptionsmittel.

Das Rectisof-Verfahren wird in Ullmann's Encyclopedia of Industrial Chemistry, 6. Aufl. Bd. 15, S. 399 ff. grundsätzlich beschrieben. Dieses Verfahren dient, ebenso wie beispielsweise das Purisol-Verfahren, dazu, Rohsynthesegas, hauptsächlich aus CO und H₂ bestehend und hergestellt durch partielle Oxidation von Schwerölen, Petrolkoks, Abfallstoffen oder durch Kohle- bzw. Ötrückstandsvergasung, von Begleitgasen zu reinigen. Das Rectisol Verfahren verwendet als Absorptionsmittel tief gekühltes Methanol, wobei die Eigenschaft des Methanols ausgenutzt wird, dass seine Absorptionsfähigkeit für die Begleitstoffe mit abnehmender Temperatur stark zunimmt, während sie für Kohlenmonoxid (CO) und Wasserstoff (H₂) praktisch konstant bleibt. Bei den unerwünschten Begleitstoffe handelt es sich hauptsächlich um die Begleitgase Carbonylsulfid (COS), Schwefelwasserstoff (H₂S) und Kohlendioxid (CO₂).

Beim Rectisol-Verfahren wird zwischen dem Standard- und dem selektiven Rectisol-Verfahren unterschieden.

Beim sogenannten Standard-Rectisol-Verfahren werden die Begleitgase COS/H₂S und das CO₂ gemeinsam, in einem Absorptionsschritt aus dem Rohsynthesegas abgetrennt.

Beim sogenannten selektiven Rectisol-Verfahren erfolgt die Abtrennung der schwefelhaltigen Begleitgase COS/H₂S und des Kohlenstoffdioxids aus dem Rohsynthesegas in zwei separaten, nacheinander-ablaufenden Absorptionsschritten. Allerdings wird bei der Absorption der schwefelhaltigen Begleitgase COS/H₂S in der ersten Absorptionsstufe auch in gewissem Umfang CO₂ vom Methanol absorbiert. Zum Umfang des Rectisol-Verfahrens gehört auch die Aufarbeitung der Absorptionsflüssigkeit Methanol.

Die Abtrennung des Kohlenstoffdioxids aus dem im zweiten Absorptionsschritt beladenen Methanol erfolgt in einer Flashkolonne. Die Abtrennung des Kohlenstoffdioxids aus dem im ersten Absorptionsschritt, hauptsächlich mit den schwefelhaltigen Begleitgasen COS/H₂S beladenen Methanol, erfolgt in der die Erfindung betreffenden, aus zwei Abschnitten bestehenden, sogenannten Reabsorptionskolonne. Diese Kolonne ist mit Böden als Einbauten für den Stoffaustausch ausgestattet. Das beladene Methanol wird der Kolonne in der Mitte, zwischen dem unteren und dem oberen Abschnitt der Kolonne, aufgegeben. Im unteren Abschnitt der Kolonne werden mit Stickstoff, in erster Linie Kohlenstoffdioxid, aber auch schwefelhaltige Begleitgase aus dem Methanol herausgestrippt. Im Kolonnenkopf wird Methanol, das in der Flashkolonne weitgehend von Kohlenstoffdioxid befreit wurde, aufgegeben, um die aus dem unteren Kolonnenabschnitt aufsteigenden schwefelhaltigen Begleitgase aus dem Strippgas zu reabsorbieren. Das mit Kohlenstoffdioxid beladene Strippgas wird am Kolonnenkopf zur weiteren Behandlung oder zur Abgabe in die Atmosphäre abgegeben. Aus dem Kolonnensumpf wird das von Kohlenstoffdioxid, befreite, aber noch mit schwefelhaltigen Begleitgasen COS/H₂S beladenen Methanol ausgeleitet und einer Kolonne zugeleitet, in der diese Begleitgase durch Erwärmen aus dem Methanol ausgetrieben werden.

Der Vollständigkeit halber soll erwähnt werden, dass es auch möglich ist, an Stelle der hier behandelten, aus einem Strippteil und einem Reabsorptiönsteil zusammengesetzten Kolonne, jeweils eine separate Strippkolonne und eine Absorptionskolonne einzusetzen. Im Folgenden soll aber ausschließlich die aus einem unteren Strippteil und einem oberen Reabsorptionsteil zusammengesetzte Kolonne behandelt werden.

Um die Wirtschaftlichkeit der Anlagen zur Synthesegaserzeugung und -reinigung zu erhöhen, werden die Anlagen für immer größere Gasdurchsätze ausgelegt. Besonders bei hohen Lasten weisen Reabsorptions- und Strippingkolonnen, die als Bodenkolonnen ausgeführt sind, einen hohen Druckverlust auf, der sich nur mit einem entsprechend höheren Betriebsdruck kompensieren lässt. Dabei werden Kolonnen mit möglichst großen Durchmessern verlangt, wobei aber mit steigendem Kolonnendurchmesser die Herstellungskosten stark zunehmen und zu Problemen beim Transport der Teile vom Herstellungs- zum Aufstellungsort der Anlage, führen können.

Die Aufgabe der Erfindung besteht darin, eine Reabsorptionskolonne für die Abtrennung von Kohlenstoffdioxid und die Reabsorption von schwefelhaltigen Begleitgas aus beladenem Absorptionsmittel, wie Methanol, zur Verfügung zu stellen, die bei gleichbleibendem Kolonnendurchmesser eine Erhöhung der Aufarbeitungskapazität aufweist.

### Beschreibung der Erfindung

Die Aufgabe wird durch eine Kolonne gemäß Anspruch 1 gelöst.

### Erfindungsgemäße Absorptionskolonne:

Kolonne, umfassend einen unteren, den Kolonnensumpf umfassenden Abschnitt zum Abtrennen absorbierter Gase aus einer beladenen Absorptionsflüssigkeit durch Strippen, welcher einen Einlass für die beladene Absorptionsflüssigkeit, Einbauten zur Förderung des Stoffaustauschs, einen Einlass für das Strippgas und einen Auslass an der tiefsten Stelle des Sumpfes für die behandelte Flüssigkeit umfasst, und einen oberen, den Kolonnenkopf umfassenden Abschnitt zur Reabsorption eines Teils der gestrippten Gase durch eine Absorptionsflüssigkeit, umfassend einen Einlass für die Absorptionsflüssigkeit, Einbauten zur Förderung des Stoffaustauschs und einen Auslass im Kolonnenkopf für das Gasgemisch aus Strippgas und dem aus der Flüssigkeit abgetrennten Gas umfasst,, wobei die Abschnitte so miteinander verbunden sind, dass Gas vom unteren in den oberen und Flüssigkeit vom oberen in den unteren Abschnitt fließen kann, dadurch gekennzeichnet, dass mindestens einer der Abschnitte als Einbauten für den Stoffaustausch mindestens eine strukturierte Packung umfasst.

### Bevorzugte Ausgestaltungen der Erfindung

Eine bevorzugte Ausgestaltung der Erfindung besteht darin, dass beide Abschnitte der Kolonne als Einbauten für den Stoffaustausch jeweils mindestens eine strukturierte Packung umfasst. Die Verwendung von strukturierten Packungen an Stelle der bisher verwendeten Kolonnenböden führt zu einem geringeren Druckverlust des durch die Kolonne geleiteten Strippgases. Daher ist es möglich, die Kolonne mit einem kleineren Durchmesser zu bauen.

Eine weitere bevorzugte Ausgestaltung der Erfindung besteht darin, dass der untere Abschnitt mindestens einen Kaminboden umfasst, sowie einen oberhalb des Kaminbodens gelegenen Auslass für die im Kaminboden aufgefangene Absorptionsflüssigkeit und einen Einlass, unterhalb des Kaminbodens, für die Rückführung dieser Flüssigkeit in die Kolonne. Diese Ausgestaltung ist insbesondere für Anwendungsfälle geeignet, in denen es sich bei dem Absorptionsmittel um tief kaltes Methanol handelt. Die Absorptionsfähigkeit von Methanol ist temperaturabhängig, wobei sie mit steigender Temperatur abnimmt. Dieser Effekt wird im Strippteil der Kolonne genutzt, indem dort eine höhere Methanoltemperatur als im oberen Teil, dem Reabsorptionsteil der Kolonne, eingestellt wird. Dazu wird das aus dem oberen Kolonnenteil herabfließende Methanol in einem Kaminboden aufgefangen, aus der Kolonne ausgeleitet, in einem . Wärmeaustauscher erwärmt und, unterhalb des Kaminbodens, wieder in die Kolonne eingeleitet. Häufig wird diese Prozedur in einem gewissen Abstand ein zweites Mal durchgeführt, wobei zwischen den beiden Kaminböden Einbauten zur Förderung des Stoffaustauschs, wie eine strukturierte Packung, installiert sind. Als Heizmittel zur Erwärmung des Methanols wird häufig ein anderer, prozessinterner Methanolstrom, der bei diesem Wärmeaustausch gekühlt wird, verwendet.

Die Erfindung umfasst auch die Verwendung einer mit strukturierten Packungen ausgerüsteten Reabsorptionskolonne in einer Anlage zum Betreiben des selektiven Rectisol Verfahrens, unter Verwendung von tiefgekühltem Methanol als Absorptionsmittel.

Die Erfindung umfasst ebenfalls die Verwendung einer mit strukturierten Packungen ausgerüsteten Reabsorptionskolonne in einer Anlage zum Betreiben des Purisol-Verfahrens, unter Verwendung von N-Methylpyrrolidon als Absorptionsmittel.

Die Erfindung umfasst weiterhin die Verwendung einer mit strukturierten Packungen ausgerüsteten Reabsorptionskolonne in einer Anlage zum Betreiben eines Gasreinigungsverfahrens, dass als Absorptionsmittel Mischungen zwischen Methanol und N-Methylpyrrolidon, N-Methylpyrrolidon und einem aminhaltigen Absorptionsmittel (besonders Diethanolamin, Diisopropylamin, Diethylamin) oder Methanol und einem aminhaltigen Absorptionsmittel (besonders Diethanolamin, Diisopropylamin, Diethylamin).

### Ausführungsbeispiel

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Anhand der Zeichnung soll im Folgenden die Erfindung erläutert werden.

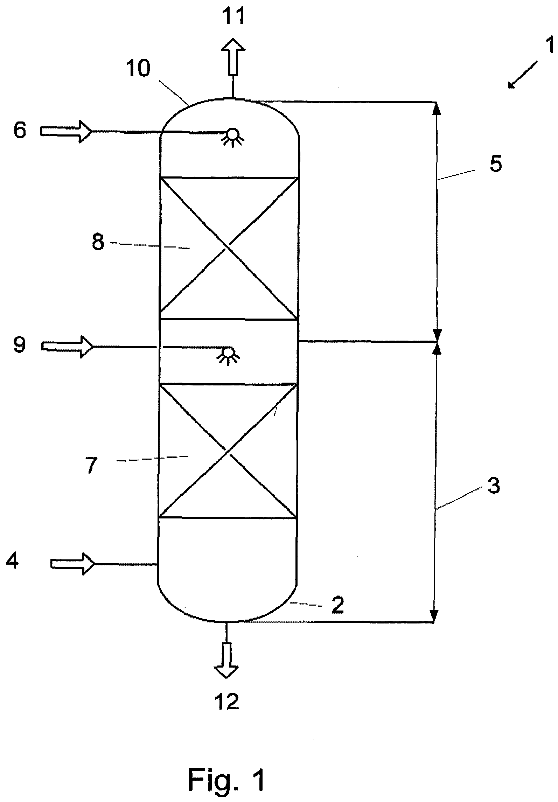

Die einzige Zeichnung, Fig. 1, zeigt einen Längsschnitt durch eine erfindungsgemäße Stripp- und Reabsorptionskolonne 1 zur Abtrennung von Kohlendioxid aus mit schwefelhaltigen Begleitgasen und mit Kohlendioxid beladenem Methanol, das als Absorptionsflüssigkeit verwendet wurde, in beispielhafter Ausführung.

Die in Fig. 1 gezeigte Kolonne 1 ist Teil einer Anlage zur Durchführung des selektiven Rectisol-Verfahrens, wie sie in Ullmann' Encyclopedia of Industrial Chemistry, 6. Aufl. Bd. 16, S. 401, Fig. 46 dargestellt ist.

Die Kolonne 1 umfasst einen unteren, den Kolonnensumpf 2 umfassenden und bis zur Kolonnenmitte reichenden Abschnitt 3, in dem Kohlendioxid und schwefelhaltige Begleitgase aus dem durch die Kolonne herabfließenden Methanol mit einem Strippgasstrom 4 herausgestrippt werden und einen oberen, von der Kolonnenmitte bis zum Kolonnenkopf 10 reichenden Abschnitt 5, in welchem die sich im Strippgas befindlichen schwefelhaltigen Begleitgase von einem Methanolstrom 6 wieder reabsorbiert werden. Beide Abschnitte 3, 5 der Kolonne 1 sind jeweils mit einer strukturierten Packung 7, 8 ausgestattet. Der in dieser Kolonne 1 aufzuarbeitende, beladene Methanolstrom 9 wird in der Kolonnenmitte aufgegeben. Der Methanolstrom 9 wurde im ersten, hier nicht dargestellten, Absorptionsschritt des Rectisol-Verfahrens aus dem Synthesegas heraus mit schwefelhaltigen Begleitgasen, aber auch mit Kohlendioxid, beladen. Bei dem Strom 6 handelt es sich um Methanol, dass im zweiten, hier nicht dargestellten, Absorptionsschritt des Rectisol-Verfahrens mit Kohlendioxid beladen und in einer Flashkolonne, hier nicht dargestellt, anschließend weitgehend vom Kohlendioxid befreit wurde. Als Strippgas 4 wird Stickstoff verwendet. Das mit Kohlendioxid beladene Strippgas 11 verlässt die Kolonne 1 am Kolonnenkopf 10 zur weiteren Behandlung außerhalb des Rectisol-Verfahrens oder in die Atmosphäre.

Das von Kohlendioxid befreite, aber noch mit schwefelhaltigen Komponenten beladene Methanol 12, verlässt die Kolonne 1 aus dem Kolonnensumpf 2 in Richtung der zum Rectisol-Verfahren gehörenden Heißregenerierungskolonne, hier nicht dargestellt.

### Gewerbliche Anwendbarkeit

Die Erfindung stellt eine Möglichkeit dar, Reabsorptionskolonnen, bei gleichbleibender Leistung zur Abtrennung von Kohlendioxid und Reabsorption von schwefelhaltigen Begleitgasen aus einer Absorptionsflüssigkeit, wie Methanol, mit geringerem Kolonnendurchmesser auszulegen. Die Erfindung ist daher vorteilhaft gewerblich anwendbar.

### Bezugszeichenliste

- 1: Stripp- und Reabsorptionskolonne
- 2: Kolonnensumpf
- 3: Unterer Abschnitt der Kolonne
- 4: Strippgasstrom
- 5: Oberer Abschnitt der Kolonne
- 6: Methanolstrom
- 7: Strukturierte Packung
- 8: Strukturierte Packung
- 9: Methanolstrom
- 10: Kolonnenkopf
- 11: Beladener Strippgasstrom
- 12: Methanol

## Patentansprüche

1. Kolonne, umfassend einen unteren, den Kolonnensumpf umfassenden Abschnitt zum Abtrennen absorbierter Gase aus einer mit diesen beladenen Absorptionsflüssigkeit durch Strippen, welcher einen Einlass für die beladene Absorptionsflüssigkeit, Einbauten zur Förderung des Stoffaustauschs, einen Einlass für das Strippgas und einen Auslass an der tiefsten Stelle des Sumpfes für die behandelte Flüssigkeit umfasst und einen oberen, den Kolonnenkopf umfassenden Abschnitt zur Reabsorption eines Teils der gestrippten Gase durch eine Absorptionsflüssigkeit, umfassend einen Einlass für die Absorptionsflüssigkeit, Einbauten zur Förderung des Stoffaustauschs und einen Auslass im Kolonnenkopf für das Gasgemisch aus Strippgas und dem aus der Flüssigkeit abgetrennten Gas umfasst, wobei die Abschnitte so miteinander verbunden sind, dass Gas vom unteren in den oberen Abschnitt und Flüssigkeit vom oberen in den unteren Abschnitt fließen kann, **dadurch gekennzeichnet, dass** mindestens einer der Abschnitte als Einbauten für den Stoffaustausch mindestens eine strukturierte Packung umfasst.

2. Kolonne gemäß Anspruch 1, **dadurch gekennzeichnet, dass** jeder der Abschnitte als Einbauten für den Stoffaustausch mindestens eine strukturierte Packung umfasst.

3. Kolonne gemäß Anspruch 1 oder 2, **dadurch gekennzeichnet, dass** der untere Abschnitt mindestens einen Kaminboden umfasst, sowie einen oberhalb des Kaminbodens gelegenen Auslass für die im Kaminboden aufgefangene Absorptionsflüssigkeit und einen Einlass, unterhalb des Kaminbodens, für die Rückführung dieser Flüssigkeit in die Kolonne.

4. Verwendung einer Kolonne gemäß mindestens einem der vorhergehenden Ansprüche in einer Anlage zum Betreiben des selektiven Rectisol-Verfahrens, unter Verwendung von tiefkaltem Methanol als Absorptionsmittel.

5. Verwendung einer Kolonne gemäß mindestens einem der Ansprüche 1 bis 3 zum Betreiben des Purisol-Verfahrens, unter Verwendung von N-Methylpyrrolidon als Absorptionsmittel.

6. Verwendung einer Kolonne gemäß mindestens einem der Ansprüche 1 bis 3 zum Betreiben des Selexol-Verfahrens, unter Verwendung von Polyethylenglykoldimethylether als Absorptionsmittel.

7. Verwendung einer Kolonne gemäß Ansprüche 1 bis 3 in einer Anlage zum Betreiben eines Gasreinigungsverfahrens, dass als Absorptionsmittel Mischungen zwischen Methanol und N-Methylpyrrolidon, N-Methylpyrrolidon und einem Aminhaltigen Absorptionsmittel (besonders Diethanolamin, Diisopropylamin,Diethylamin) oder Methanol und einem Aminhaltigen Absorptionsmittel (besonders Diethanolamin, Diisopropylamin,Diethylamin).
